## Europäisches Patentamt

## European Patent Office

## Office européen des brevets

(19)

(11) Veröffentlichungsnummer: **0 131 910**
**B1**

(12) **EUROPÄISCHE PATENTSCHRIFT**

(45) Veröffentlichungstag der Patentschrift:
30.03.88

(21) Anmeldenummer: 84108161.5

(22) Anmeldetag: 12.07.84

(51) Int. Cl.⁴: **B 60 R 17/02**

(54) Zentralschmiereinrichtung für Anhänger.

(30) Priorität: 14.07.83 DE 3325375
10.10.83 DE 3336789

(43) Veröffentlichungstag der Anmeldung:
23.01.85 Patentblatt 85/4

(45) Bekanntmachung des Hinweises auf die Patenterteilung:
30.03.88 Patentblatt 88/13

(84) Benannte Vertragsstaaten:
AT BE CH DE FR GB IT LI NL SE

(56) Entgegenhaltungen:
DE - A - 2 458 711
US - A - 2 725 119

(73) Patentinhaber: Deutsche Tecalemit GmbH, Am Metallwerk 11, D-4800 Bielefeld 12 (DE)

(72) Erfinder: Reuter, Klaus, Schwarzer Kamp 32, D-4800 Bielefeld 14 (DE)
Erfinder: Kuhn, Wolfgang, Holunderweg 7, D-4815 Schloss Holte/Sende (DE)

(74) Vertreter: Patentanwälte Dipl.-Ing. Bodo Thielking Dipl.-Ing. Otto Elbertzhagen, Gadderbaumer Strasse 20, D-4800 Bielefeld 1 (DE)

## Beschreibung

Die Erfindung betrifft eine Zentralschmiereinrichtung für Fahrzeuge, mit einer Schmierpumpe und von dieser zu den einzelnen Schmierstellen führenden Schmierstellenleitungen, mit einem die Schmierpumpe steuernden Magnetventil, das nach Ablauf einer durch eine Zeitbildungseinheit ermittelten Zeit betätigt wird.

Eine bekannte Zentralschmiereinrichtung dieser Art (DE-A 2 458 711) ist ausschliesslich für Zugwagen geeignet. Das Vorsehen einer elektrisch gesteuerten und betätigten Zentralschmiereinrichtung dieser bekannten Art in einem Anhänger ist in vielen Fällen nicht möglich, weil der Anhänger keine eigene Stromquelle aufweist und in vielen Fällen kein ständig stromführendes Kabel zwischen dem Zugwagen und dem Anhänger frei ist. Tagsüber entsteht eine elektrische Verbindung zwischen dem Zugwagen und dem Anhänger in den meisten Fällen nur kurzzeitig, nämlich durch die Blinkimpulse des Blinkers und durch die Betätigung der Bremslichter.

Für Anhänger sind bisher lediglich mechanisch gesteuerte Zentralschmiereinrichtungen bekannt. Dabei kann die Schmierpumpe beispielsweise durch Hubbewegungen der Radaufhängung oder in Abhängigkeit von der Zahl der Radumdrehungen gesteuert werden. Solche bekannten mechanischen Lösungen sind aufwendig und störanfällig.

Der Erfindung liegt die Aufgabe zugrunde, eine Zentralschmiereinrichtung der als bekannt vorausgesetzten Art so auszubilden, dass sie für die Schmierung von Fahrzeuganhängern geeignet ist, deren Stromversorgung durch die Zuleitungen zu den Blinkleuchten oder zu den Bremsleuchten erfolgt.

Die Lösung dieser Aufgabe erfolgt mit den Merkmalen des Kennzeichnungsteils von Anspruch 1.

Die erfindungsgemässe Zentralschmiereinrichtung erlaubt deren elektrische Steuerung, ohne hierzu entweder eine eigene Stromversorgung am Anhänger oder eine ständig stromführende Verbindungsleitung zum Zugwagen zu benötigen. Dies ist insbesondere bei den am weitesten verbreiteten Anhängern, die keine ständig stromführende Verbindung mit dem elektrischen Versorgungssystem des Zugwagens aufweisen, vorteilhaft.

Für die erfindungsgemässe Zentralschmiereinrichtung genügen die kurzzeitigen Blinkerimpulse oder Bremslichtimpulse.

Die erfindungsgemässe Vorrichtung kann vergleichsweise einfach aufgebaut sein. Sie ist nicht störungsanfällig sondern funktionsfähig auch bei ungünstigen Umgebungsbedingungen.

Bevorzugte Ausführungsformen der Erfindung sind in den abhängigen Ansprüchen beschrieben. Nachstehend sind bevorzugte Ausführungsformen der Erfindung anhand der Zeichnung im einzelnen beschrieben. Es zeigen:

Fig. 1 ein Schaltschema einer ersten Ausführungsform einer Steuerungseinheit für die Zentralschmiereinrichtung,

Fig. 2 ein Schaltschema einer zweiten Ausführungsform einer Steuerungseinrichtung für die Zentralschmiereinrichtung,

Fig. 3 ein Schaltschema einer dritten Ausführungsform einer Steuerungseinheit für die Zentralschmiereinrichtung,

Fig. 4 ein Schaltschema einer vierten Ausführungsform einer Steuerungseinheit für die Zentralschmiereinrichtung.

In den Zeichnungen sind gleiche oder gleichartige Teile jeweils mit den gleichen Bezugszeichen bezeichnet. Einander entsprechende Bauteile haben die gleichen Bezugszeichen, sind jedoch um einen Hochstrich ergänzt.

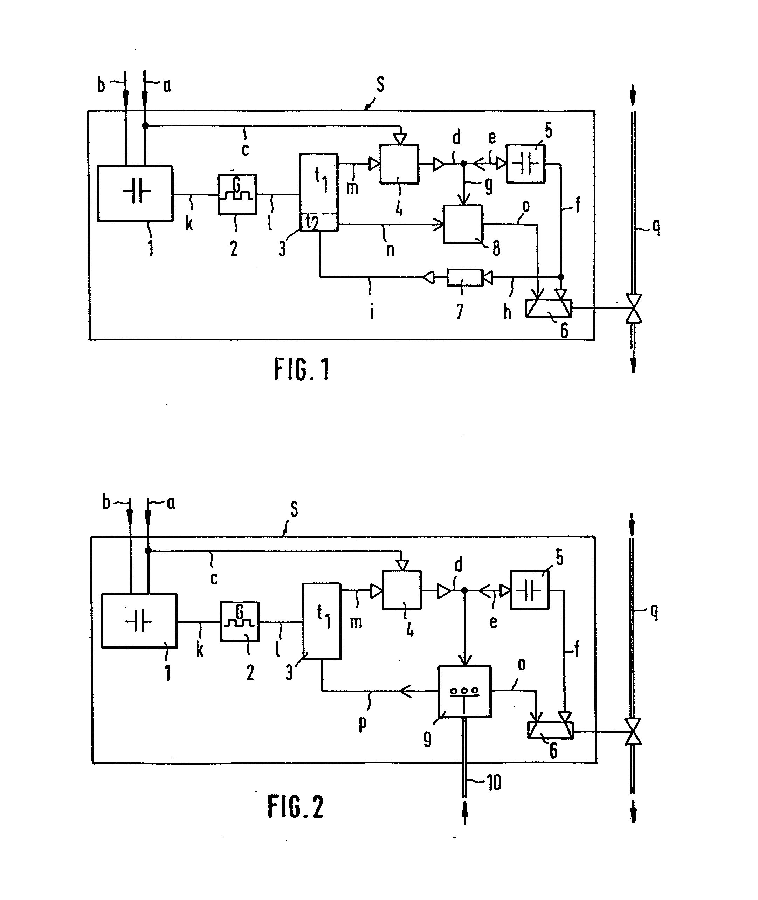

Zunächst zu Figur 1

Die elektrische Steuerungseinrichtung ist innerhalb des mit S bezeichneten Rechtecks schematisch dargestellt. Eine Zuleitung b von der Blinkleuchte und eine Zuleitung a von der Bremsleuchte führen zu einem Kondensator 1. Der Kondensator 1 ist über eine Leitung k mit einem Impulsgenerator 2 verbunden. Dem Impulsgenerator 2 ist über eine Leitung 1 ein Impulszähler 3 nachgeschaltet. Der Impulsgeber 2 und der Impulszähler 3 bilden zusammen eine Zeitbildungseinrichtung. Im Ausführungsbeispiel gemäss Figur 1 sind im Impulsgeber 3 zwei unterschiedliche Impulszähler vorgesehen, und zwar ein Impulszähler $t_1$ für eine erste vorgegebene Zeit und ein Impulszähler $t_2$ für eine zweite vorgegebene Zeit.

Der Impulszähler $t_1$ ist über eine Leitung m mit einem Schalter 4 verbunden. Der Schalter 4 besitzt eine Sperrstellung, in der kein Durchgang eines Impulses von den Leitungen a und c zur Leitung d möglich ist und eine Durchgangsstellung, in der die Leitungen c und d miteinander verbunden sind. Die Durchschaltung des Schalters 4 erfolgt erst, sobald eine vorgegebene Pausenzeit abgelaufen ist. Während dieser Pausenzeit führt die Betätigung der Bremse und damit die Aktivierung der Leitungen a und c ausschliesslich zur Aufladung des Kondensators 1. Sobald die vorgegebene Pausenzeit für die Schmierpause abgelaufen ist und der Schalter 4 auf Durchgang zwischen den Leitungen c und d geschaltet hat, führt die nächste Betätigung der Bremse zu einer Stromzufuhr über die Leitungen a, d, d, e und f zu einer Erregung des Magneten 6 eines bistabilen elektrischen Magnetventils. Hierdurch wird die mit einem Druckreservoir verbundene Steuerleitung q freigegeben mit der Folge, dass die nicht dargestellte Schmierpumpe zur Durchführung eines Schmiervorgangs betätigt wird.

Beim Erregen des Magnetankers 6 wird gleichzeitig der Kondensator 5 geladen. Der über die Leitung f fliessende Strom gelangt ausser an den Magnetanker 6 auch durch die Leitung h zum Verzögerungsglied 7, welches den Strom über die Leitung i zum Impulszähler $t_2$ leitet. Es beginnt mit dem erwähnten Impuls die Betätigungszeit abzulaufen, die im Impulszähler $t_2$ gezählt wird und die Dauer der Magnetbetätigung bestimmt. Diese Zeit ist ebenso wie die im Impulszähler $t_1$ gemessene Zeit einstellbar.

Nach Ablauf der im Impulszähler $t_2$ gemessenen Betätigungszeit wird der Schalter 8 über die Leitung n in der Weise auf Durchgang geschaltet, dass die Leitungen g und o miteinander verbunden sind und der Kondensator 5 über die Leitungen e, g und o zur Rückstellung des Magnetankers 6 entladen werden kann. Nach der vorgegebenen Impulszahl im Impulszähler $t_2$, welche mit einer bestimmten Zeitdauer korreliert, wird also der Magnetanker aus seiner Öffnungsstellung in die mit der Schliessstellung des Magnetventils korrespondierenden Lage zurückgestellt.

Bei der Ausführungsform gemäss Figur 2 wird die Betätigungszeit für das Magnetventil nicht im Impulszähler 3 gebildet. Bei dieser Ausführungsform wird durch den Druckaufbau im Schmiersystem über die Druckleitung 10 der Druckschalter 9 betätigt. Der Kondensator 5 entlädt sich und der Magnetanker 6 wandert aus seiner Freigabestellung in seine Sperrstellung. Damit ist die Zufuhr von Druckluft oder von Drucköl durch die Steuerleitung q zur Schmierpumpe unterbrochen, und die Pausenzeit, die im Impulszähler $t_1$ gezählt wird, beginnt neu abzulaufen.

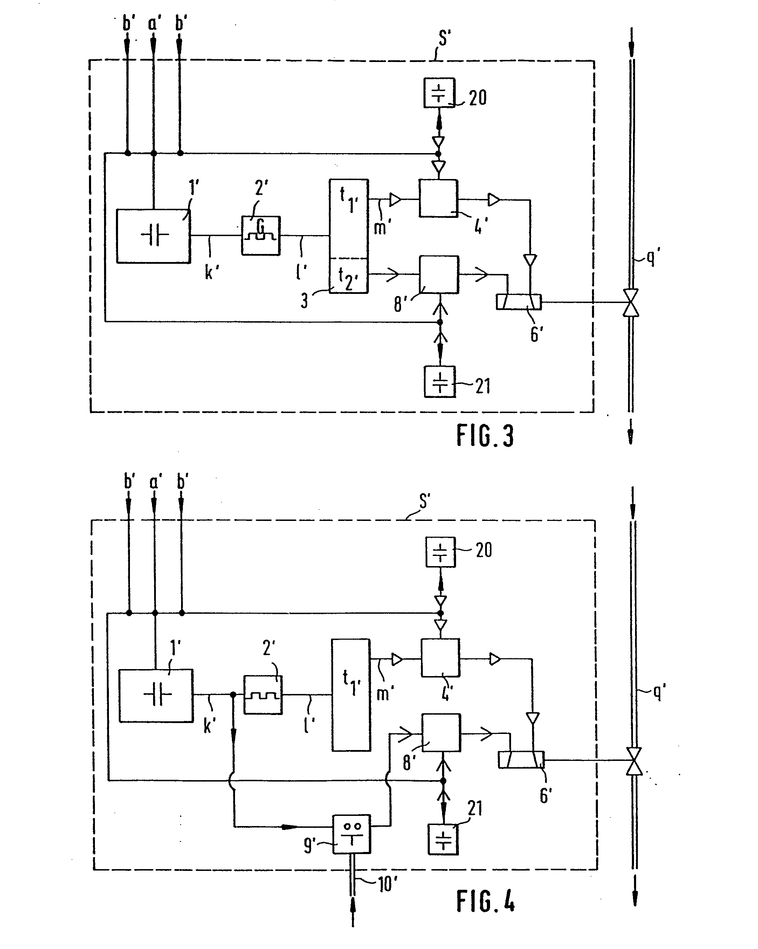

Ausführungsform gemäss Figur 3

Die elektrische Steuerungseinrichtung ist innerhalb des mit S' bezeichneten Rechtecks schematisch dargestellt. Zwei Zuleitungen b' von der rechten und linken Blinkleuchte und eine Zuleitung a' von der Bremsleuchte führen sowohl zum ersten Kondensator 1' als auch zum zweiten Kondensator 20 und dritten Kondensator 21.

Der Kondensator 1' ist über eine Leitung k' mit einem Impulsgenerator 2' verbunden. Dem Impulsgenerator 2' ist über eine Leitung l' ein Impulszähler 3' nachgeschaltet. Der Impulsgeber 2' und der Impulszähler 3' bilden zusammen eine Zeitbildungseinrichtung.

Im Ausführungsbeispiel gemäss Figur 3 sind im Impulsgeber 3' zwei unterschiedliche Impulszähler vorgesehen, und zwar ein erster Impulszähler $t_1$, für eine erste vorgegebene Zeit und ein zweiter Impulszähler $t_2$, für eine zweite vorgegebene Zeit.

Der Impulszähler $t_1$, ist über eine Leitung m' mit einem Schaltglied 4' verbunden. Das Schaltglied 4' besitzt eine Sperrstellung, in der die Verbindung zwischen dem zweiten Kondensator 20 und dem Magnetanker 6' des bistabilen Magnetventils unterbrochen ist. Ferner besitzt das Schaltglied 4' eine Durchgangsstellung, in der die Ladung des Kondensators 20 zur Umstellung des Magnetankers 6' in den Magnetanker abfliessen kann. Die Umschaltung des Schaltglieds 4 in Durchgangsstellung ist erst nach Ablauf einer vorgegebenen Pausenzeit möglich. Während dieser Pausenzeit führt die Betätigung sowohl der Bremsen als auch die Betätigung der Blinklichter ausschliesslich zur Aufladung der Kondensatoren 1', 20 und 21.

Sobald die vorgegebene Pausenzeit für die Schmierpause abgelaufen ist und das Schaltglied 4' auf Durchgang zwischen Kondensator 20 und Magnetanker 6' geschaltet hat, wird der Magnetanker 6' wegen der Erregung des zugehörigen Magneten eines bistabilen elektrischen Magnetventils so verstellt, dass die nicht dargestellte Schmierpumpe zur Durchführung eines Schmiervorgangs betätigt wird.

Nach Erreichen einer Zeit $t_2$, wird das Schaltglied 8' auf Durchgang zwischen dem dritten Kondensator 21 und dem Magnetanker 6' geschaltet. Vor Erreichen der Zeit $t_2$, ist das Schaltglied 4' bereits in Sperrstellung zurückgestellt worden.

Durch die Entladung eines dritten Kondensators 21 erfolgt die Rückstellung des Magnetankers 6' wegen der Umpolung des zugehörigen Elektromagneten.

Bei der Ausführungsform gemäss Figur 4 erfolgt die Rückstellung des Magnetankers 6' nicht nach einer eingestellten vorgegebenen Zeit. Bei dieser Ausführungsform wird ein Druckschalter 9 nach Erreichen eines vorgegebenen Drucks im Schmiersystem über die Druckleitung 10' betätigt. Der Druckschalter 9' stellt das Schaltglied 8' auf Durchgang zwischen Kondensator 21 und Magnetanker 6' mit der Folge, dass das Magnetventil geschlossen wird. Damit ist die Zufuhr von Druckluft oder Drucköl durch die Steuerleitung q' zur Schmierpumpe unterbrochen, und die Pausenzeit, die im Impulszähler $t_1$, gezählt wird, beginnt erneut abzulaufen.

**Patentansprüche**

1. Zentralschmiereinrichtung für Fahrzeuge, mit einer Schmierpumpe und von dieser zu den einzelnen Schmierstellen führenden Schmierstellenleitungen, mit einem die Schmierpumpe steuernden Magnetventil, das nach Ablauf einer durch eine Zeitbildungseinrichtung (2, 3; 2', 3') ermittelten Zeit betätigt wird, dadurch gekennzeichnet, dass für eine Anhängerschmierung durch von dem Zugwagen gespeiste, zu den Blinkleuchten und/oder Bremsleuchten führende Stromkabel (b, a; b', a') bei Betätigung dieser Leuchten ein Kondensator (1, 1') aufladbar ist, dem die Zeitbildungseinrichtung (2, 3; 2', 3') nachgeschaltet ist, die nach Ablauf der vorgegebenen Zeit eine elektrische Verbindung (c, d, e, f) zwischen dem betreffenden Stromkabel (b, a; b', a') der Leuchten und dem Magneten (6) des bistabil ausgebildeten Magnetventils freigibt, wobei anschliessend der Magnetanker (6, 6') mit Verzögerung selbsttätig durch Entladung eines ebenfalls über ein betreffendes Stromkabel aufladbaren weiteren Kondensators (5, 20) zurückgestellt wird.

2. Zentralschmiereinrichtung nach Anspruch 1, dadurch gekennzeichnet, dass die Rückstellung des Magnetankers (6, 6') nach einer vorgegebenen Zeit erfolgt.

3. Zentralschmiereinrichtung nach Anspruch 1, dadurch gekennzeichnet, dass die Rückstellung des Magnetankers (6) nach Erreichen eines vorgegebenen Schmierdrucks im Schmiersystem erfolgt.

4. Zentralschmiereinrichtung nach einem oder mehreren Ansprüchen 1 bis 3, dadurch gekennzeichnet, dass die Zeitbildungseinrichtung (2', 3') nach Ablauf einer vorgegebenen Zeit einen über das betreffende Stromkabel (b', a') aufladbaren zweiten Kondensator mit dem Magneten (6') des Magnetventils verbindet und dass ein dritter, ebenfalls über die Stromkabel (b', a') aufladbarer Kondensator nach Erreichen eines vorgegebenen Schmierdrucks im Schmiersystem zur Rückstellung des Magnetankers (6') mit dessen Magneten verbunden wird.

5. Zentralschmiereinrichtung nach einem oder mehreren der Ansprüche 1 bis 4, dadurch gekennzeichnet, dass die Zeitbildungseinrichtung (2', 3') nach Ablauf einer vorgegebenen Zeit einen ebenfalls über die betreffenden Stromkabel (b', a') aufladbaren zweiten Kondensator mit dem Magneten eines die Schmierpumpe steuernden bistabilen Magnetventils (6') verbindet, wobei ein dritter, ebenfalls über die Stromkabel (b', a') aufladbarer Kondensator nach Ablauf einer vorgegebenen Zeit zur Rückstellung des Magnetankers (6') mit dessen Magneten verbunden wird.

6. Zentralschmiereinrichtung nach einem oder mehreren der Ansprüche 1 bis 5, dadurch gekennzeichnet, dass die Zeitbildungseinrichtung (2', 3'; 2, 3) aus einem Impulsgeber (2', 2) und einem Impulszähler (3', 3) besteht.

7. Zentralschmiereinrichtung nach einem oder mehreren der Ansprüche 1 bis 6, dadurch gekennzeichnet, dass dem Impulsgeber (2') ein erster Impulszähler ($t_{1'}$) für die Betätigung eines Schaltglieds (4') zwischen dem zweiten Kondensator (20) und dem Magneten (6') nachgeschaltet ist.

8. Zentralschmiereinrichtung nach einem oder mehreren der Ansprüche 1 bis 7, dadurch gekennzeichnet, dass dem Impulsgeber (2') ein zweiter Impulszähler ($t_{2'}$) für die Betätigung eines Schaltglieds (8') zwischen dem dritten Kondensator (21) und dem Magneten (6') nachgeschaltet ist.

9. Zentralschmiereinrichtung nach einem oder mehreren der Ansprüche 1 bis 8, dadurch gekennzeichnet, dass ein durch den Druck im Schmiersystem betätigter Druckschalter (11') zum Verstellen eines Schaltglieds (8') für eine elektrische Verbindung zwischen dem dritten Kondensator (21) und dem Magneten (6') vorgesehen ist.

10. Zentralschmiereinrichtung nach einem oder mehreren der Ansprüche 1 bis 9, dadurch gekennzeichnet, dass ausser der Rückstellung des Magnetankers (6) auch die Rückstellung der Zeitbildungseinrichtung (2, 3) nach Ablauf einer vorgegebenen Zeit erfolgt.

11. Zentralschmiereinrichtung nach einem oder mehreren der Ansprüche 1 bis 9, dadurch gekennzeichnet, dass ausser der Rückstellung des Magnetankers (6) auch die Rückstellung der Zeitbildungseinrichtung (2, 3) nach Erreichen eines vorgegebenen Drucks in der Steuerleitung (q) zur Schmierpumpe erfolgt.

12. Zentralschmiereinrichtung nach einem oder mehreren der Ansprüche 1 bis 9, dadurch gekennzeichnet, dass in der elektrischen Zuleitung (a, c, d, e, f) zum Magnetanker (6) ein Schalter (4) vorgesehen ist, der eine Durchgangsstellung und eine Trennstellung aufweist.

13. Zentralschmiereinrichtung nach einem oder mehreren der Ansprüche 1 bis 9, dadurch gekennzeichnet, dass dem Schalter (4) ein Kondensator (5) nachgeschaltet ist, der bei Bremsbetätigung in Durchgangsstellung des Schalters (4) geladen wird und sich anschliessend zur Rückstellung des Zeitglieds (2, 3) entlädt.

14. Zentralschmiereinrichtung nach einem oder mehreren der Ansprüche 1 bis 9, dadurch gekennzeichnet, dass dem Impulsgeber (2) ein erster Impulszähler ($t_1$) für die Freigabe des Schalters (4) und ein zweiter Impulszähler ($t_2$) für die Steuerung der Öffnungszeit des Magnetventils nachgeschaltet ist.

## Claims

1. Centralized lubricating system for vehicles, with a lubricating pump and lubricating-point lines leading from this to the individual lubricating points, and with a solenoid valve which controls the lubricating pump and which is actuated after a time determined by a timing (2, 3; 2', 3') has expired, characterized in that in a trailer lubrication by means of power cables (b, a; b', a') fed from the tractor and leading to the flashing lights and/or brake lights, when these lights are actuated it is possible to charge a capacitor (1, 1'), after which is connected the timing unit (2, 3; 2', 3') which, after the predetermined time has expired, makes an electrical connection (c, d, e, f) between the respective power cable (b, a; b', a') of the ligths and the magnet armature (6) of the bistably formed solenoid valve, subsequently the magnet armature (6, 6') being reset automatically, with a delay, as a result of the discharge of a further capacitor (5, 20) likewise chargeable via a respective power cable.

2. Centralized lubricating system according to Claim 1, characterized in that the resetting of the magnet armature (6, 6') takes place after a predetermined time.

3. Centralized lubricating system according to Claim 1, characterized in that the resetting of the magnet armature (6) takes place after a predetermined lubricating pressure is reached in the lubricating system.

4. Centralized lubricating system according to one or more of Claims 1 to 3, characterized in that, after a predetermined time has expired, the timing (2', 3') connects a second capacitor, chargeable via the respective power cable (b', a'), to the magnet (6') of the solenoid valve, and in that a third capacitor, likewise chargeable via the power cables (b', a'), is connected to the solenoid-valve magnet for the resetting of the magnet armature (6') after a predetermined lubricating pressure is reached in the lubricating system.

5. Centralized lubricating system according to one or more of Claims 1 to 4, characterized in that, after a predetermined time has expired, the timing unit (2', 3') connects a second capacitor, likewise chargeable via the respective power cables (b', a'), to the magnet of a bistable solenoid valve (6') controlling the lubricating pump, and, after a predetermined time has expired, a third capacitor, likewise chargeable via the power cables (b', a'), is connected to the solenoid-valve magnet for the resetting of the magnet armature (6').

6. Centralized lubricating system according to one or more of Claims 1 to 5, characterized in that the timing unit (2', 3'; 2, 3) consists of a pulse generator (2', 2) and of a pulse counter (3', 3).

7. Centralized lubricating system according to one or more of Claims 1 to 6, characterized in that a first pulse counter ($t_1$) for actuating a switching element (4') between the second capacitor (20) and the magnet (6') is connected after the pulse generator (2').

8. Centralized lubricating system according to one or more of Claims 1 to 7, characterized in that a second pulse counter ($t_2$) for actuating a switching element (8') between the third capacitor (21) and the magnet (6') is connected after the pulse generator (2').

9. Centralized lubricating system according to one or more of Claims 1 to 8, characterized in that a pressure switch (11') actuated by means of the pressure in the lubricating system is provided for adjusting a switching element (8') for an electrical connection between the third capacitor (21) and the magnet (6').

10. Centralized lubricating system according to one or more of Claims 1 to 9, characterized in that, after a predetermined time has expired, not only the resetting of the magnet armature (6), but also the resetting of the timing unit (2, 3) takes place.

11. Centralized lubricating system according to one or more of Claims 1 to 9, characterized in that, after a predetermined pressure is reached in the control line (q) to the lubricating pump, not only the resetting of the magnet armature (6), but also the resetting of the timing unit (2, 3) takes place.

12. Centralized lubricating system according to one or more of Claims 1 to 9, characterized in that in the electrical feed line (a, c, d, e, f) to the magnet armature (6) there is a switch (4) which has a transmitting position and an isolating position.

13. Centralized lubricating system according to one or more of Claims 1 to 9, characterized in that connected after the switch (4) is a capacitor (5) which, when the brake is actuated, is charged in the transmitting position of the switch (4) and which is subsequently discharged for the resetting of the timer (2, 3).

14. Centralized lubricating system according to one or more of Claims 1 to 9, characterized in that connected after the pulse generator (2) is (sic) a first pulse counter ($t_1$) for opening the switch (4) and a second pulse counter ($t_2$) for controlling the opening time of the solenoid valve.

**Revendications**

1. Dispositif de graissage centralisé pour véhicules comprenant une pompe de graissage et des canalisations de graissage s'étendant entre cette pompe et chaque point de graissage et une vanne électromagnétique commandant la pompe de graissage et qui est actionnée après l'écoulement d'un temps déterminé par un dispositif de temporisation (2, 3 ; 2', 3') caractérisé en ce qu'il comprend pour le graissage de la remorque par le tracteur un condensateur (1, 1') qui est chargé par un câble d'alimentation (b, a, ; b', a') du tracteur conduisant aux voyants de clignotant et/ou de freinage de la remorque lorsque ces voyants sont actionnés, en aval de ce condensateur (1, 1') étant prévu ledit dispositif de temporisation (2, 3 ; 2', 3') qui, après l'écoulement d'un temps prédéterminé établit une liaison électrique (c, d, e, f) entre ledit cable (b, a ; b', a') des voyants et l'enduit (6) de ladite vanne électromagnétique qui est du type bistable, ledit enduit (6, 6') étant ensuite ramené automatiquement dans sa position initiale après retardement, par le déchargement d'un autre condensateur (5, 20) qui est chargé par un câble conducteur correspondant.

2. Dispositif de graissage centralisé suivant la revendication 1, caractérisé en ce que le déplacement de l'enduit (6, 6') dans sa position initiale est effectué après un temps de retardement prédéterminé.

3. Dispositif de graissage centralisé suivant la revendication 1, caractérisé en ce que le déplacement de l'enduit (6) dans sa position initiale est effectué lorsqu'une pression prédéterminée est atteinte dans le système de graissage.

4. Dispositif de graissage centralisé suivant l'une ou plusieurs des revendications 1 à 3, caractérisé en ce que le dispositif de temporisation (2', 3') relie après l'écoulement d'un temps prédéterminé un deuxième condensateur chargé à travers la ligne correspondante (b', a') audit enduit (6) de la vanne électromagnétique et qu'un troisième condensateur chargé également à travers la ligne (b', a') est relié, lorsque la pression dans le système de graissage atteint un niveau prédéterminé, à l'aimant de l'enduit (6') pour ramener ce dernier dans sa position initiale.

5. Dispositif de graissage centralisé suivant l'une ou plusieurs des revendications 1 à 4, caractérisé en ce que le circuit de temporisation (2', 3') relie, après l'écoulement d'un temps prédéterminé, un deuxième condensateur également chargé à travers la ligne correspondante (b', a') à l'aimant d'une vanne électromagnétique bistable (6') commandant la pompe de graissage, un troisième condensateur également chargé à travers les lignes (b', a') étant relié, après l'écoulement d'un temps prédéterminé, à l'aimant de l'enduit (6′) pour ramener ce dernier dans sa position initiale.

6. Dispositif de graissage centralisé suivant l'une ou plusieurs des revendications 1 à 5, caractérisé en ce que le dispositif de temporisation (2′, 3′; 2, 3) est constitué d'un générateur d'impulsions (3′, 3).

7. Dispositif de graissage centralisé suivant l'une ou plusieurs des revendications 1 à 6, caractérisé en ce qu'en aval du générateur d'impulsions (2′) est prévu un premier compteur d'impulsions ($t_1$,) pour la commande d'un élément de commutation (4′) inserré entre le deuxième condensateur (20) et l'aimant (6′).

8. Dispositif de graissage centralisé suivant l'une ou plusieurs des revendications 1 à 7, caractérisé en ce qu'en aval du générateur d'impulsions (2′) est prévu un deuxième compteur d'impulsions ($t_2$,) pour la commande d'un élément de commutation (8′) inserré entre le troisième condensateur (21) et l'aimant (6′).

9. Dispositif de graissage centralisé suivant l'une ou plusieurs des revendications 1 à 8, caractérisé en ce qu'il comporte un commutateur à fluide sous pression (11′) actionné par la pression du système de graissage et qui commande un élément de commutation (8′) établissant une liaison électrique entre le troisième condensateur (21) et l'aimant (6′).

10. Dispositif de graissage centralisé suivant l'une ou plusieurs des revendications 1 à 9, caractérisé en ce qu'en plus du déplacement de l'enduit (6) dans sa position initiale, le retour dans sa position initiale du dispositif de temporisation (2, 3) est également effectué après l'écoulement d'un temps prédéterminé.

11. Dispositif de graissage centralisé suivant l'une ou plusieurs des revendications 1 à 9, caractérisé en ce qu'en plus du déplacement de l'enduit (6) dans sa position initiale, le retour dans sa position initiale du dispositif de temporisation (2, 3) est effectué lorsque la pression dans la canalisation de commande (9) de la pompe de graissage atteint une valeur prédéterminée.

12. Dispositif de graissage centralisé suivant l'une ou plusieurs des revendications 1 à 9, caractérisé en ce qu'il comprend dans les lignes d'alimentation électrique (a, c, d, e, f) de l'enduit (6) un commutateur (4) pouvant être amené d'une position de blocage dans une position de passage.

13. Dispositif de graissage centralisé suivant l'une ou plusieurs des revendications 1 à 9, caractérisé en ce qu'en aval du commutateur (4) est prévu un condensateur (5) qui est chargé lors de l'actionnement du frein et lorsque le commutateur (4) s'étend dans sa position de passage, le condensateur étant déchargé lorsque le dispositif de temporisation (2, 3) retourne dans sa position initiale.

14. Dispositif de graissage centralisé suivant l'une ou plusieurs des revendications 1 à 9, caractérisé en ce qu'en aval du générateur d'impulsions (2) sont prévus un premier compteur d'impulsions ($t_1$) pour le déblocage du commutateur (4) et un deuxième compteur d'impulsions ($t_2$) commandant la durée de l'ouverture de la vanne électromagnétique.

FIG. 1

FIG. 2

FIG. 3

FIG. 4